# EUROPEAN PATENT APPLICATION

(11) **EP 4 650 097 A1**
(43) Date of publication of application: **19.11.2025**
(21) Application number: 25174911.5
(22) Date of filing: 07.05.2025
(51) Int. Cl.: B23Q 5/00, B23Q 11/08, B23Q 37/00

(54) **MODULAR UNIT OF A COVERING APPARATUS FOR MACHINE TOOLS AND RELATED APPARATUS**

(30) Priority: 13.05.2024 IT 202400010756
(71) Applicant: P.E.I. Protezioni Elaborazioni Industriali S.r.l., 40012 Calderara di Reno (Bologna) (IT)
(72) Inventor: BENEDETTI, Michele, 40033 CASALECCHIO DI RENO (BOLOGNA) (IT); ROSSATO, Edoardo, 44028 POGGIO RENATICO (FERRARA) (IT)
(74) Representative: Milli, Simone

(57) **Abstract**

Described is a modular unit **(8)** of a covering apparatus **(1)** for machine tools, defining a first modular profile (**S1**) of a movable crosspiece **(4)** of the apparatus **(1),** and comprising a first transmission unit **(7b)** for moving the crosspiece **(4)** and a drive unit **(9)** associated with the first transmission unit **(7b).**

## Description

This invention relates to a modular unit of a covering apparatus for machine tools, and a related apparatus.

This invention is advantageously applied in the closing of a work area of a machine tool, such as, for example, a milling machine.

The closing of the sky of the work area is carried out for limiting the escape and the diffusion of toxic fumes or hazardous residue, swarf and dust deriving from the processing of materials such as carbon fibres or composite materials in general or from the use of lubricating-cooling liquids.

Laterally, the work area of the machine tool is closed through by rigid panels which are connected to a frame of the machine itself.

On the other hand, above the work area is generally closed by a suitable covering apparatus, to which this invention relates.

Patent application IT102017000097201 describes a covering apparatus lying horizontally. That patent application describes in detail a solution for moving the covering apparatus, in particular a relative movable crosspiece, to which is fixed a bellows-like covering element.

The covering apparatus described therein is structurally simple and allows a fast access to the work area; it is also of minimum size and above all light and well balanced, which are qualities that mean it not very subject to malfunctions.

However, in the event of a malfunction or fault of the motor which drives the crosspiece, it is necessary to fully dismantle the latter in order to position it on a repair bench.

This operation, as well as being complex, results in quite long operating times, with consequent extended machine stoppages, and is therefore not very satisfactory in terms of maintenance cost.

The technical purpose and aim of the invention are therefore to provide an improved solution which overcomes the above-mentioned drawback. Patent document US7389709 describes an electro-mechanical actuator comprising a recirculating ball transmission system. The actuator comprises a supporting structure, a lead nut mounted on the structure, at least one magnet fixed to the lead nut, at least one coil mounted on the structure and which can be powered with current to induce rotation of the lead nut inside the structure, a rotary feedback device and a screw positioned inside the lead nut, with the possibility of movement both rotational and axial relative to it. Both the screw and the lead nut have cooperative spherical seats, which define a path in which several balls are housed, with a recirculation channel of the balls integrated in the screw. A rod is connected to the screw to move in synchrony with it. The relative rotation between the lead nut and the screw causes the screw and rod to move axially relative to the supporting structure.

Patent document WO2023202773A1 describes a linear module comprising a control screw, designed to rotate about its own axis of rotation. A lead nut is set up to convert the rotational movement of the screw into an axial movement of the lead nut itself. A coupling unit, driven by the lead nut, moves axially along a guide which runs parallel to the screw and allows its correct movement. The module is provided with a motor, preferably brushless, consisting of a stator and a rotor, which provides the torque necessary for the rotation of the screw.

In this module, the motor, the control device, the control screw, the lead nut and the guide are all located inside the inner space of the housing.

Patent document EP3450092 describes a covering device for machine tools comprising at least one pair of parallel guides, which can be installed on a frame of the machine at an opening located above the compartment to be covered.

There is also a covering body with a variable configuration, associated with the guides, and a movable crosspiece.

The covering body has a first end side which can be fixed to the frame and a second end side connected to the movable crosspiece. The latter is provided with a movement system which allows the sliding along a direction parallel to the guides, thus determining the extension or withdrawal of the covering body. The technical purpose and the aim specified above are resolved and achieved by a modular unit of a covering apparatus for machine tools, and by a relative apparatus, comprising the features described in one or more of the appended claims.

Further features and advantages of the invention are more apparent in the non-limiting description which follows of a non-exclusive embodiment of the invention.

The description is set out below with reference to the accompanying drawings which are provided solely for purposes of illustration without restricting the scope of the invention and in which:
- Figure 1 is a perspective view of a covering apparatus made in accordance with the invention;

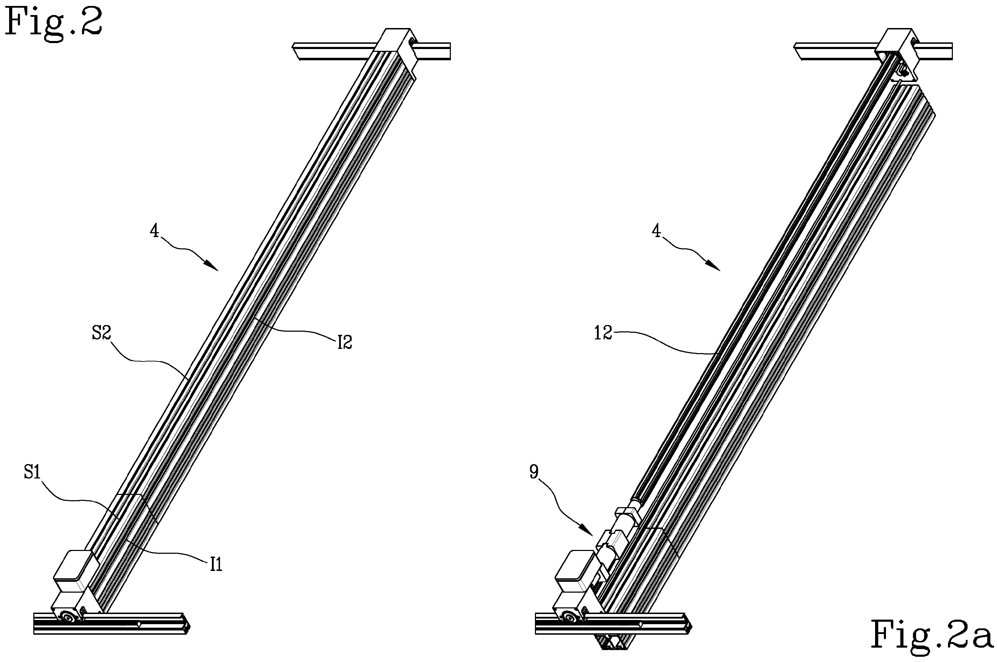

- Figure 2 is an enlarged view of a detail of the apparatus of Figure 1;
- Figure 2a is a further view of the detail of Figure 2 with a part not assembled in order to show other details;
- Figure 3 is a further view of the detail of Figure 2, at least partly disassembled;

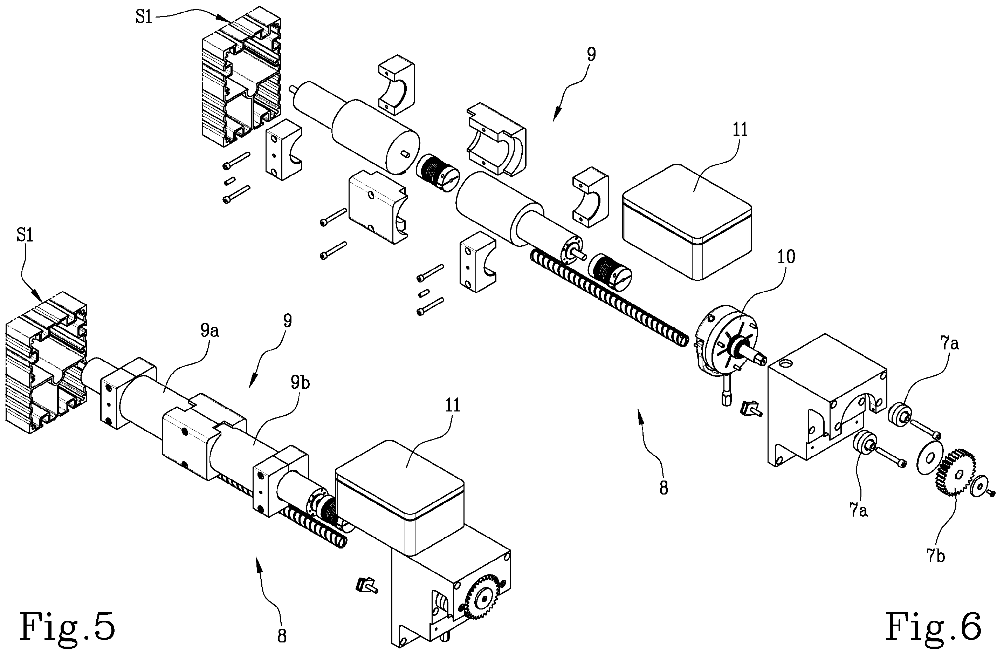

- Figures 4, 5 and 6 show the details of a portion of the apparatus of Figure 1; and
- Figure 7 is a schematic view of a machine tool comprising a covering apparatus according to this invention.

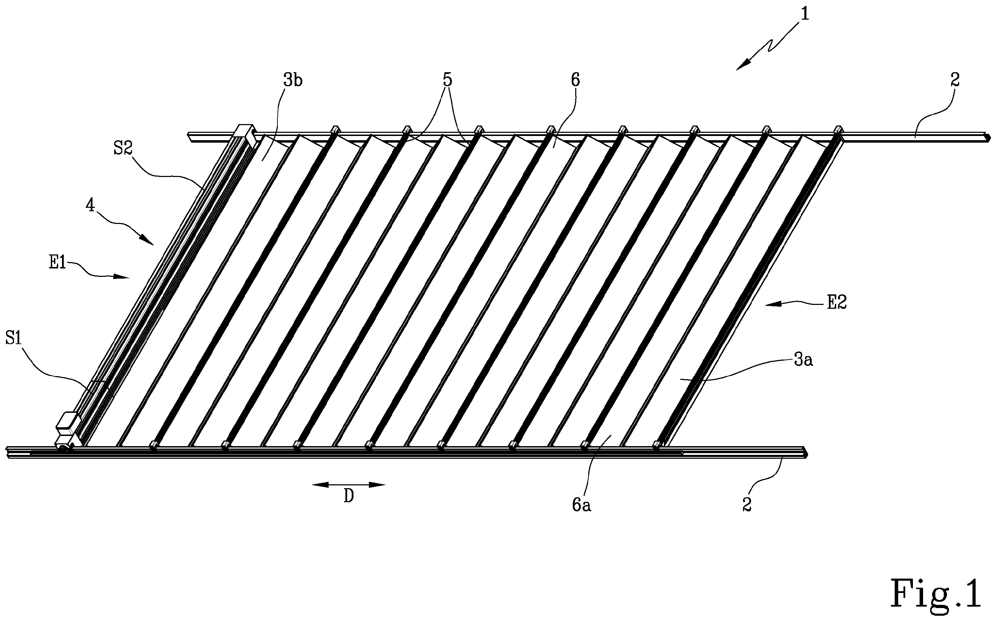

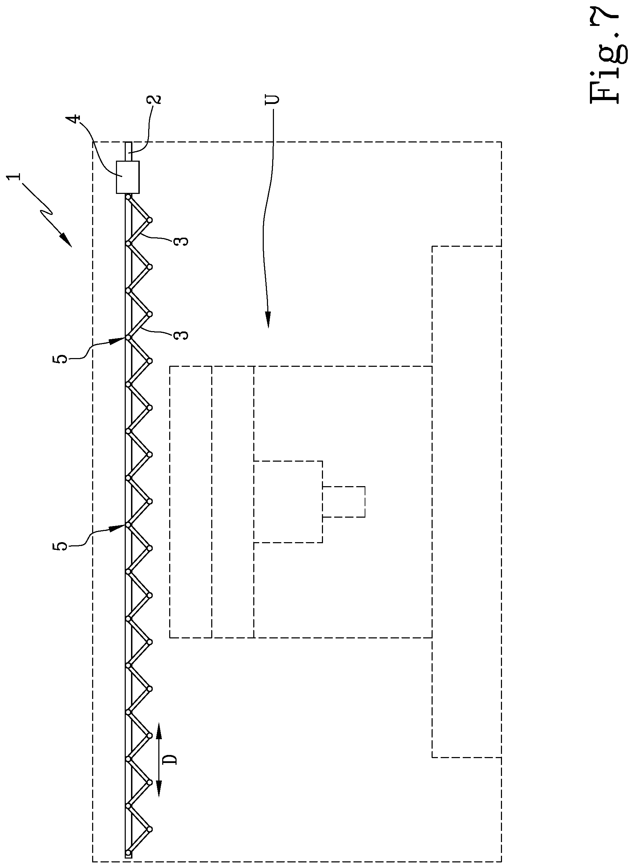

With reference to Figures 1 and 7, the numeral 1 denotes in its entirety a covering apparatus for machine tools made in accordance with this invention.

As illustrated in Figure 7, the covering apparatus 1 may form part of a machine tool U, which may be, for example, a milling machine.

In particular, the covering apparatus of the 1 may be mounted horizontally to cover an upper portion of the U-shaped machine tool in such a way as to separate the work area from the upper area of the building or the machine itself.

Work area means the space inside which the machining of the parts is carried out and where, following these machining operations, toxic fumes or residue resulting from the machining which are potentially hazardous are produced.

The covering apparatus 1 is represented in Figure 1 in a relative general form.

The covering apparatus 1 comprises a pair of guides 2 parallel to each other and connectable to a frame of the machine tool U at an upper opening of the frame located above the compartment to be covered.

The covering apparatus of Figure 1 comprises an extendable covering element 3 associated with the pair of guides 2 and a movable crosspiece 4. The covering element 3 has a variable configuration and comprises a first end 3a, fixable to the frame of the machine tool U, and a second end 3b, fixed to the movable crosspiece 4.

In other words, the movable crosspiece 4 is fixed to the second end 3b of the covering element 3 which can be extended for closing or opening, with its movement, the work area of the machine tool U (compartment to be covered).

The covering body 3 comprises a plurality of beams 5 movable parallel to each other along a direction of movement D parallel to the pair of guides 2.

The covering body 3 also comprises a plurality of bellows-like covering segments 6, each fixed to two adjacent beams 5.

Preferably, the covering segments 6 are made in the form of bellows 6a.

The crosspiece 4 comprises movement means configured for allowing the movement of the crosspiece 4 along the direction of movement D in such a way as to determine a configuration of extension or a configuration of shortening of the covering element 3.

The extension configuration means a configuration wherein the movable crosspiece 4 is at an end E1 of the guides 2 (Figure 1) in such a way that the covering element 3 completely covers the above-mentioned work area. In this configuration, the covering elements 6 in the form of bellow 6a are completely open and the beams 5 are spaced from each other in such a way as to allow the complete opening of the covering elements 6.

The shortening configuration means a configuration wherein the movable crosspiece 4 is at an end E2 of the guides 2, opposite to the end E1 (not illustrated), wherein the end 3a is fixed to the frame of the machine tool U, in such a way that the covering element 3 leaves accessible the work area to allow maintenance works or the entry or exit of elements by means of a gantry crane. In this configuration, the covering elements 6 in the forms of bellows 6a are enclosed and the beams 5 are substantially adjacent to each other.

Preferably, the beams 5 are made of a metallic material, preferably aluminium.

Preferably, the covering elements 6 made in the form of bellows 6a have a cover.

Preferably, the cover is made of translucent fabric.

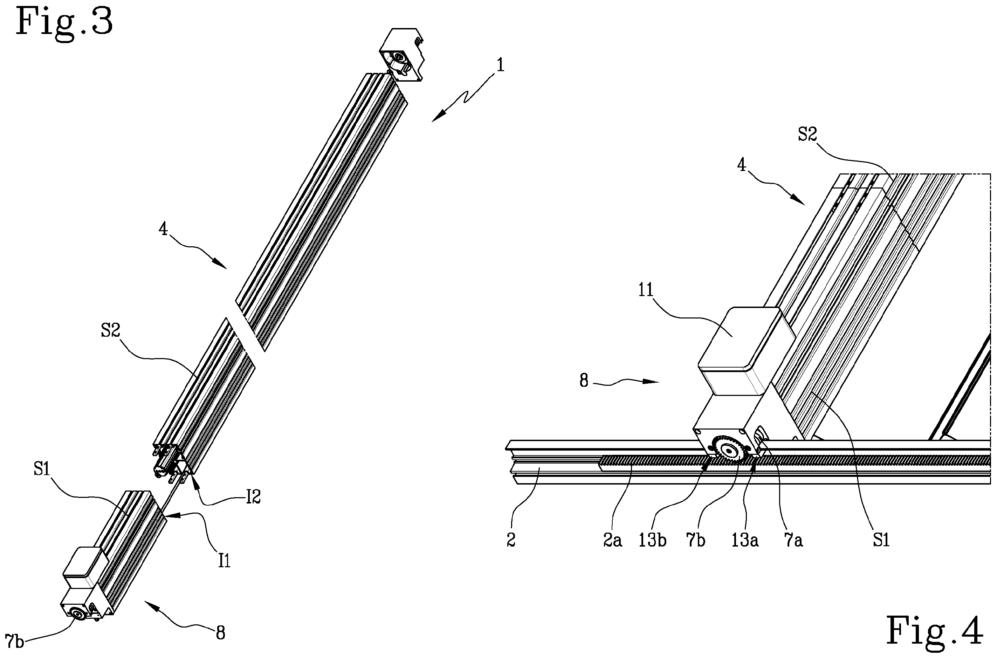

As shown in Figure 4, the crosspiece 4 slides on the guides 2 with the aid of bearings 7a.

The bearings 7a are positioned in such a way as to facilitate the sliding of the crosspiece 4 along the sliding direction D.

Preferably, in a configuration of assembly of the apparatus 1 on the machine tool, the bearings 7a are positioned above the guides 2 on which they slide.

Preferably, each guide 2 comprises a relative rack 2a positioned above the guide 2.

In other words, in a configuration of assembly of the apparatus 1 on the machine tool U, the racks 2a are outside the compartment to be covered. The racks 2a are aligned to the guides 2 and are, therefore, also parallel to each other.

It should be noted that the racks 2a are positioned outside the guides 2 (where the term "outside" means the part not touched by the covering apparatus 1).

It should also be noted that the racks 2a have teeth, in use, facing upwards.

Preferably, the movement means comprise a first and a second transmission unit comprising respective pinions 7b integral with the crosspiece 4 and meshing in the racks 2a.

According to the invention, the crosspiece 4 comprises at least two modular profiles S1, S2, which can be separated from and coupled to each other.

It should be noted that said crosspiece 4 is the first crosspiece, that is, an outer crosspiece of the covering apparatus 1.

Each modular profile S1, S2 of the crosspiece 4 comprises a respective frame section I1, I2 of the crosspiece 4. The frame sections I1, I2 can be separated from each other, in particular they can be quickly assembled and disassembled from each other.

A first modular profile S1 of the crosspiece 4 is defined by a modular unit 8 which is configured as an assembly so as to be separated as one from the rest of the crosspiece 4.

The modular unit 8 comprises a first of the above-mentioned pinions 7b for moving the crosspiece 4, and a drive unit 9 associated with the first pinion 7b to allow the sliding of the crosspiece 4 on the pair of guides 2.

In particular, the drive unit 9 may comprise two motors 9a, 9b to advantageously transfer more power with commercial components which are easy to find and inexpensive.

Each motor 9a, 9b is a low voltage direct current motor, preferably less than 50 V, even more preferably less than, or equal to, 24 V.

The direct current motors 9a, 9b are powered and controlled by a PLC controller of the machine tool U (not illustrated), or a suitable control unit, which is provided with all the functions necessary to allow control of the covering apparatus 1 with automated commands.

The modular unit 8 also comprises a braking device 10 configured to be active on the first pinion 7b when the drive unit 9 does not activate the first pinion 7b.

Preferably, the braking device 10 is an electro-mechanical brake which is activated by the PLC controller, that is, by the control unit, when the drive unit 9 does not move the crosspiece 4, and is deactivated when the drive unit 9 moves the crosspiece 4.

In other words, when the functions of the PLC controller result in it not activating the drive unit 9 to move the crosspiece 4, the PLC controller is programmed for advantageously braking unwanted movements of the crosspiece 4 by means of the braking device 10.

Both the drive unit 9 and the braking device 10 are advantageously positioned inside the first profile S1 of the crosspiece 4.

This allows, on the one hand, a reduction in the overall dimensions, and, on the other hand, a total protection both of the drive unit 9 and of the braking device 10. Moreover, as indicated, that allows the modular unit 8 to be separated as one from the rest of the crosspiece 4.

The modular unit 8 may also comprise one or more rechargeable batteries, which are housed inside a block 11, which is fixed to the first frame section I1 of the crosspiece 4.

The rechargeable batteries are provided both for actuating the drive unit 9 (through the above-mentioned PLC controller or the electronic control unit) and for actuating the braking device 10.

The batteries contained in the block 11 are rechargeable by suitable recharging means (not illustrated) which can be engaged following the sliding of the crosspiece 4 and the arrangement of the crosspiece 4 in one or more predetermined recharging positions.

More in detail, it is possible, preferably, that when the crosspiece 4 is positioned in positions which lead to the configuration of extension or shortening, it is in contact with electrical contacts which recharge the above-mentioned batteries.

This solution advantageously leads to the reduction of cables or bulky electrical connections as well as the possibility of recharging the batteries without having to change them manually with others, avoiding even lengthy standby times.

The drive unit 9, as well as being associated with the first transmission unit forming part of the modular unit 8, is associated with the second transmission unit contained inside the remaining part of the crosspiece 4, enclosed by the second modular profile S2.

The second transmission unit, forming part of the second modular profile S2, as well as comprising, as mentioned, the second of the two pinions 7b, comprises a drive shaft 12 for transferring the motion from the drive unit 9 to the second pinion 7b.

The central axis of the drive shaft 12 therefore coincides with the axis of rotation of the pinions 7b.

The drive shaft 12 is configured for rotating the pinions 7b and therefore allowing the sliding of the crosspiece 4 along the sliding direction D folioing a bilateral movement. This solution advantageously leads to preventing the crosspiece 4 from jamming if moved from only one side, due to its great width.

According to another aspect, the second modular profile S2 may also comprise a further braking device (not illustrated) configured to be active on the second transmission unit when the drive unit 9 is not active. According to another aspect, the modular unit comprises at least one contact element 13a, 13b, configured to prevent, in the case of unwanted lifting of the crosspiece 4, the tipping of the crosspiece.

Preferably, the modular unit comprises a first contact element 13a and a second contact element 13b, positioned, relative to the longitudinal direction of extension of the rack, respectively in two different positions (in front of and behind the transmission units 7b).

It should be noted that the first contact element 13a and second contact element 13b fasten a portion (upper and, preferably, protruding towards the outside) of the guide 2, preventing the lifting, that is, the tipping, of the crosspiece 4.

The covering apparatus 1 as described above is therefore able to overcome the drawbacks of the prior art.

Advantageously, in effect, in the event of maintenance or malfunction of the drive unit 9 and/or of the braking device 10, it will be sufficient to remove and replace only the modular unit 8, which is light and with minimum dimensions, leaving mounted the remaining part of the crosspiece 4.

## Claims

1. A modular unit **(8)** of a covering apparatus (**1**) for machine tools, defining a first modular profile (**S1**) of a movable crosspiece (**4**) of said apparatus (**1**), wherein the crosspiece (**4**) is fixed to an end (**3b**) of a covering element (**3**) which can be extended for closing or opening a work area of the machine tool (**U**); and comprising a first transmission unit (**7b**) for moving said crosspiece (**4**), and a drive unit (**9**) associated with said first transmission unit (**7b**).

2. The modular unit **(8)** according to claim 1, also comprising a braking device (**10**) configured to be active on the first transmission unit (**7b**) when the drive unit (**9**) does not activate the first transmission unit (**7b**).

3. The modular unit **(8)** according to claim 1 or 2, also comprising a first section (**I1**) of a frame, which is also modular, of said crosspiece (**4**).

4. The modular unit **(8)** according to claim 3, wherein said drive unit (**9**) is positioned inside said first profile (**S1**).

5. The modular unit **(8)** according to claim 3 or 4 and claim 2, also comprising a braking device (**10**) configured to be active on the first transmission unit (**7b**) when the drive unit (**9**) does not activate the first transmission unit (**7b**), wherein said braking device (**10**) is positioned inside said first profile (**S1**).

6. The modular unit **(8)** according to any one of claims 1 to 5, wherein said drive unit (**9**) comprises at least one low voltage direct current motor (**9a**, **9b**), preferably less than 50 V, even more preferably less than or equal to 24 V.

7. The modular unit **(8)** according to claim 6, wherein said drive unit (**9**) comprises two low voltage direct current motors (**9a**, **9b**), preferably less than 50 V, even more preferably less than or equal to 24 V.

8. The modular unit **(8)** according to any one of claims 1 to 7 and claim 2, also comprising one or more rechargeable batteries (**11**) provided for actuating at least one between said drive unit (**9**) and the braking device (**10**), said batteries (**11**) being rechargeable by suitable recharging means which can be engaged following the sliding of said crosspiece (**4**) and the arrangement of said crosspiece (**4**) in one or more predetermined recharging positions.

9. The modular unit **(8)** according to any one of claims 1 to 8, configured as an assembly so as to be separated as one from the rest of the crosspiece (**4**).

10. A modular movable crosspiece (**4**) of a covering apparatus (**1**) for machine tools (**U**), comprising at least two modular profiles (**S1, S2**) which can be separated from each other, of which a first modular profile (**S1**) is defined by the modular unit (**8**) according to any one of claims 1 to 9, and a second modular profile (**S2**) comprises a second transmission unit (**7b**, **12**) for moving said crosspiece (**4**) associated with said drive unit (**9**).

11. The movable crosspiece (**4**) according to claim 10, wherein the modular unit (**8**) also comprises a braking device (**10**) configured to be active on the first transmission unit (**7b**) when the drive unit (**9**) does not activate the first transmission unit (**7b**), and also comprising a further braking device configured to be active on the second transmission unit (**7b**, **12**) when said drive unit (**9**) does not activate the second transmission unit (**7b**, **12**).

12. The movable crosspiece (**4**) according to claim 10 or 11, wherein the modular unit (**8**) also comprises a first section (**I1**) of a frame, which is also modular, of the crosspiece (**4**), and also comprising a second modular frame section (**I2**) which can be separated from the first frame section (**I1**).

13. A covering apparatus for machine tools, comprising:
- at least one pair of guides (**2**) parallel to each other and connectable to a frame of a machine tool (**U**) at an opening in the frame located above a compartment to be covered;
- at least one extendable covering element (**3**) associated with said guides (**2**); and
- a movable crosspiece (**4**), slidable on said pair of guides (**2**);
wherein:
- said covering element (**3**) has a first end (**3a**) fixable to said frame and a second end (**3b**) fixed to the movable crosspiece (**4**),
- the movable crosspiece (**4**) comprises movement means (**9**, **12, 7b**) to allow a movement of the movable crosspiece (**4**) along a direction of movement (**D**) parallel to said guides (**2**) in such a way as to determine a configuration of extension or a configuration of shortening of said covering element (**3**); and
- said movable crosspiece (**4**) is made according to any one of claims 10 to 12.

14. The covering apparatus **(1)** according to claim 13, wherein each guide of said pair of guides (**2**) comprises a relative rack (**2a**) and wherein the first and the second transmission units comprise respective pinions (**7b**) integral with said movable crosspiece (**4**) and meshed in said racks (**2a**).

15. A machine tool (**U**) comprising a covering apparatus (**1**) according to any one of claims 13 to 14.
